(19) **Europäisches Patentamt / European Patent Office / Office européen des brevets**

(11) **EP 4 056 439 B1**

(12) **FASCICULE DE BREVET EUROPEEN**

(45) Date de publication et mention de la délivrance du brevet:
**05.06.2024 Bulletin 2024/23**

(21) Numéro de dépôt: **22157716.6**

(22) Date de dépôt: **21.02.2022**

(51) Classification Internationale des Brevets (IPC):
**B60W 30/16** *(2020.01)*    **B60W 30/17** *(2020.01)*
**B60W 10/06** *(2006.01)*    **B60W 30/18** *(2012.01)*
**B60W 50/00** *(2006.01)*

(52) Classification Coopérative des Brevets (CPC):
**B60W 30/17; B60W 10/06; B60W 30/18018;**
B60W 2050/0024; B60W 2554/802;
B60W 2554/804; B60W 2556/35; B60W 2754/30

(54) **PROCÉDÉ DE RÉGULATION AUTOMATIQUE DE LA VITESSE D'UN VÉHICULE AUTOMOBILE**

VERFAHREN ZUR AUTOMATISCHEN REGULIERUNG DER GESCHWINDIGKEIT EINES KRAFTFAHRZEUGS

METHOD FOR AUTOMATICALLY REGULATING THE SPEED OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.03.2021 FR 2102264**

(43) Date de publication de la demande:
**14.09.2022 Bulletin 2022/37**

(73) Titulaire: **Ampere SAS**
**92100 Boulogne-Billancourt (FR)**

(72) Inventeurs:
• **DEBORNE, Renaud**
**78084 Guyancourt (FR)**
• **MALLOL, Denis**
**78084 Guyancourt (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 2 251 240      WO-A1-2020/157407**
**US-A1- 2016 229 402      US-A1- 2019 344 791**

**Description**

DOMAINE TECHNIQUE DE L'INVENTION

La présente invention concerne de manière générale les aides à la conduite de véhicules automobiles à conduite assistée ou à conduite autonome.

Elle concerne plus particulièrement un procédé de régulation automatique de la vitesse d'un véhicule automobile hôte, comportant, lorsqu'au moins deux véhicules automobiles tiers précèdent le véhicule automobile hôte sur sa voie de circulation, des étapes de :

- acquisition d'au moins une donnée relative à la dynamique de chaque véhicule automobile tiers, et de
- détermination d'une consigne de pilotage des moyens de commande de la vitesse du véhicule automobile hôte en fonction des données acquises.

L'invention concerne aussi un véhicule automobile équipé d'un calculateur adapté à mettre en oeuvre ce procédé.

ETAT DE LA TECHNIQUE

Dans un souci de sécurisation des véhicules automobiles, on équipe actuellement ces derniers de systèmes d'aide à la conduite ou de systèmes de conduite autonome. Un véhicule ainsi équipé sera dans la suite appelé véhicule hôte.

Parmi ces systèmes, on connait notamment les régulateurs de vitesse adaptatifs (plus connus sous l'abréviation ACC, de l'anglais « Adaptative Cruise Control »).

Un tel régulateur de vitesse propose au conducteur du véhicule hôte de choisir une consigne de vitesse à laquelle il souhaite que le véhicule roule, puis il commande le véhicule hôte de manière qu'il roule à la vitesse de consigne saisie par le conducteur, sauf si un véhicule tiers précède le véhicule hôte. Dans ce cas, le régulateur de vitesse calque la vitesse du véhicule hôte sur celle de ce véhicule tiers de façon à garder une distance de sécurité suffisante avec ce dernier.

Il arrive toutefois que le véhicule tiers ait un comportement erratique, ce qui risque de provoquer des accélérations et freinages indésirables de la part du véhicule hôte.

Pour résoudre ce problème, le document JP4411794 propose de baser le calcul de la vitesse du véhicule hôte non seulement sur celle du véhicule tiers qui le précède, mais aussi sur celle d'un éventuel second véhicule tiers qui lui-même précéderait ce premier véhicule tiers.

Pour cela, le véhicule hôte estime les vitesses des deux véhicules tiers, il en déduit un modèle virtuel de véhicule global, et enfin définit une vitesse optimale de régulation.

Cette solution, bien qu'efficace dans certaines conditions de circulation, n'est pas adaptée dans d'autres conditions de circulation, notamment lorsque le véhicule hôte se trouve dans des bouchons de circulation.

En effet, dans ces conditions, il a été constaté que le véhicule hôte redémarre souvent en retard par rapport au premier véhicule tiers (celui qui se trouve immédiatement devant lui), de sorte qu'il a tendance à accélérer trop fortement pour rejoindre ce véhicule tiers, ce qui l'oblige ensuite à freiner voire à freiner brutalement lorsque le véhicule tiers est contraint de s'arrêter à nouveau. Le document EP2251240 décrit un système de guidage longitudinal adaptatif programmé pour adapter la vitesse d'un véhicule hôte dans diverses situations, en tenant compte de plusieurs véhicules qui précèdent le véhicule hôtes. Mais il ne pallie pas l'inconvénient précité.

PRESENTATION DE L'INVENTION

Afin de remédier à l'inconvénient précité de l'état de la technique, la présente invention propose un procédé de régulation automatique tel que défini par la revendication 1. Il est proposé aussi un véhicule automobile tel que défini par la revendication 9. Les revendications dépendantes portent sur des réalisations préférées.

Ainsi, grâce à l'invention, le véhicule automobile hôte peut se préparer plus tôt au redémarrage du premier véhicule tiers, en tenant compte du fait que le deuxième véhicule tiers a déjà redémarré.

De cette manière, le véhicule hôte peut suivre les deux véhicules tiers sans être contraint d'accélérer exagérément pour les rattraper.

Plus précisément, le véhicule hôte est ainsi apte à redémarrer au même moment que le premier véhicule tiers.

Il peut alors redémarrer dès qu'il le souhaite, après le démarrage du premier véhicule hôte, par exemple après un temps de latence déterminé ou lorsque des conditions sont vérifiées (typiquement lorsque la distance entre ces deux véhicules passe au-dessus d'un seuil et/ou que la vitesse du premier véhicule tiers dépasse un seuil).

Un autre avantage de l'invention est que le procédé est applicable sans nécessiter de prévoir dans les véhicules de nouveau capteurs en plus de ceux généralement embarqués dans les véhicules de moyenne et haute gammes vendus dans le commerce.

Encore un autre avantage est que le procédé permet une conduite plus souple du véhicule, sans à-coup.

L'invention est en outre utilisable en synergie avec d'autres systèmes d'aide à la conduite (système d'évitement d'obstacles...).

D'autres caractéristiques avantageuses et non limitatives du procédé de régulation automatique sont les suivantes :

- la consigne de pilotage est déterminée en fonction également de ladite au moins une donnée relative à la dynamique du premier véhicule automobile tiers ;
- si au moins un troisième véhicule automobile tiers précède le véhicule automobile hôte sur sa voie de circulation et/ou sur une voie de circulation adjacente à sa voie de circulation, la consigne de pilotage est déterminée en fonction également d'au moins une donnée relative à la dynamique dudit au moins un troisième véhicule automobile tiers ;
- il est prévu une étape de détermination d'au moins une donnée équivalente relative à la dynamique d'un véhicule virtuel équivalent en fonction des données relatives à la dynamique de chaque véhicule automobile tiers, et la consigne de pilotage est déterminée en fonction de ladite au moins une donnée équivalente ;
- ladite donnée équivalente comprend une distance relative et/ou une vitesse relative entre le véhicule automobile hôte et le véhicule virtuel équivalent ;
- ladite distance relative est calculée au moyen de l'équation suivante :

$$D_{eq} = \min\left(D_1 + (\Delta V_2 - \Delta V_1) \cdot \frac{D_2}{D_1 + D_2} \cdot k_b \ , D1\right),$$

où

$D_{eq}$ est la distance relative,
$D_1$ est la distance entre le véhicule automobile hôte et le premier véhicule automobile tiers,
$D_2$ est la distance entre le véhicule automobile hôte et le deuxième véhicule automobile tiers,
$\Delta V_1$ est la différence de vitesses entre le véhicule automobile hôte et le premier véhicule automobile tiers,
$\Delta V_2$ est la différence de vitesses entre le véhicule automobile hôte et le deuxième véhicule automobile tiers,
$k_b$ est un gain prédéterminé ou calculé, qui est inférieur ou égal à 0 ;

- le gain est calculé au moyen de l'équation suivante :

$$k_b = \min\left(f\left(\frac{TIV_2 - TIV_1}{TIV_2} \ , DV_2 - DV_1\right), 0\right),$$

où :

$f$ est une fonction mathématique prédéterminée,
$TIV_1$ est une durée nécessaire pour que véhicule automobile hôte atteigne la position du premier véhicule automobile tiers,
$TIV_2$ est une durée nécessaire pour que véhicule automobile hôte atteigne la position du deuxième véhicule automobile tiers ;

- la vitesse relative est obtenue en dérivant la distance relative par rapport au temps.
- lesdites données comprennent :

la distance relative entre le véhicule automobile hôte et chaque véhicule automobile tiers, et/ou
la vitesse absolue, ou une de ses composantes, du véhicule automobile hôte et de chaque véhicule automobile tiers, et/ou
la vitesse relative, ou une de ses composantes, entre le véhicule automobile hôte et chaque véhicule automobile tiers, et/ou
l'accélération absolue, ou une de ses composantes, du véhicule automobile hôte et de chaque véhicule automobile tiers, et/ou

l'accélération relative, ou une de ses composantes, entre le véhicule automobile hôte et chaque véhicule automobile tiers, et/ou

la durée permettant au véhicule hôte d'atteindre la position du véhicule tiers considéré.

## DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] représente une situation dans laquelle un véhicule hôte est précédé par deux véhicules tiers ;

[Fig. 2] est une vue homologue de celle représentée sur la figure 1, sur laquelle apparait également un véhicule virtuel ;

[Fig. 3] est un graphique illustrant un premier exemple de variations dans le temps de la vitesse des véhicules tiers de la figure 1 et du véhicule virtuel de la figure 2 ;

[Fig. 4] est un graphique illustrant pour ce premier exemple les variations dans le temps de la vitesse du véhicule hôte de la figure 1 et de l'état arrêté ou démarré de son moteur, lorsqu'il est piloté sur la base uniquement de l'un des deux véhicules tiers ;

[Fig. 5] est un graphique illustrant pour ce premier exemple les variations dans le temps de la vitesse du véhicule hôte de la figure 1 et de l'état arrêté ou démarré de son moteur, lorsqu'il est piloté sur la base des deux véhicules tiers ;

[Fig. 6] est un graphique illustrant un deuxième exemple de variations dans le temps de la distance séparant le véhicule hôte de chacun des véhicules tiers et virtuel de la figure 2 ;

[Fig. 7] est un graphique illustrant pour ce deuxième exemple les variations dans le temps de l'accélération du véhicule hôte de la figure 1, lorsqu'il est piloté sur la base uniquement de l'un des deux véhicules tiers et sur la base des deux véhicules tiers.

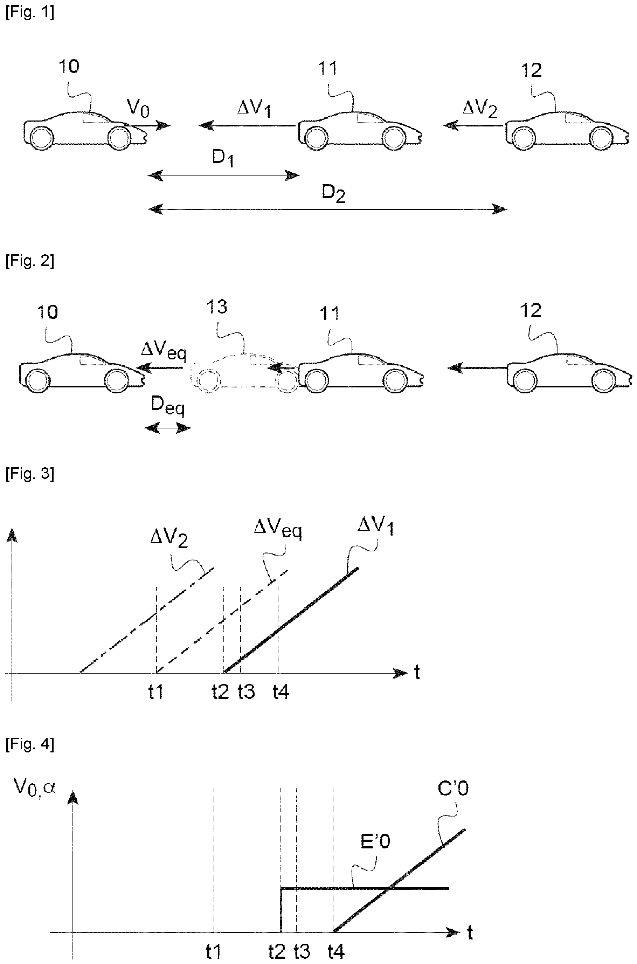

Sur la figure 1, on a représenté trois véhicules automobiles roulant les uns derrière les autres sur la même voie de circulation.

Il pourrait s'agir de n'importe quel type de véhicules, par exemple de camions, de bus, de motocyclettes...

Il s'agit dans l'exemple ici représenté de trois voitures comportant classiquement chacune un châssis qui délimite un habitacle pour notamment le conducteur du véhicule, quatre roues dont deux roues avant directrices, un groupe motopropulseur, un système de direction et une ligne de freinage.

Ces différents éléments étant bien connus, ils ne seront pas décrits ici en détail.

L'un de ces trois véhicules automobiles sera ci-après appelé véhicule hôte 10 en ce sens qu'il sera équipé d'un système faisant plus précisément l'objet de la présente invention et qui sera décrit ci-après. Les deux autres véhicules seront quant à eux qualifiés de premier véhicule tiers 11 et de deuxième véhicule tiers 12 (le deuxième précédent le premier).

On pourra préciser que le groupe motopropulseur du véhicule hôte 10 pourra être indifféremment du type à combustion interne, hybride ou purement électrique. Dans la suite, nous considérerons qu'il s'agit d'un moteur à combustion interne. Dans tous les cas, le groupe motopropulseur comportera un actionneur permettant de commander le régime et/ou le couple qu'il développe.

Le véhicule hôte 10 comporte par ailleurs un calculateur conçu pour commander les actionneurs précités.

Ce calculateur comporte ici un processeur, une mémoire et une interface d'échange de données, connectée par exemple à un réseau CAN du véhicule. Ce calculateur est donc ici formé d'un unique contrôleur mais il pourrait en variante être formé de plusieurs contrôleurs séparés.

Grâce à son interface d'échange de données, le calculateur est adapté à recevoir différentes informations, notamment des données externes issues de télédétecteurs RADAR ou LIDAR équipant le véhicule hôte 10 et des données internes issues d'un écran tactile sur lequel le conducteur peut saisir des informations.

Grâce à cette interface, le calculateur est aussi adapté à commander les actionneurs précités.

Grâce à sa mémoire, le calculateur mémorise une application informatique, constituée de programmes d'ordinateur comprenant des instructions dont l'exécution par le processeur permet la mise en oeuvre par le calculateur du procédé décrit ci-après.

Le calculateur mémorise notamment un système d'arrêt et de redémarrage du moteur à combustion interne, plus connu sous sa dénomination anglaise de système « Stop&Start ».

Le calculateur mémorise également un système de régulation de vitesse adaptatif, ci-après désigné « système ACC ».

Ce système ACC permet de mettre en oeuvre un procédé de régulation automatique de la vitesse $V_0$ du véhicule hôte 10.

Ce procédé est ici mis en oeuvre lorsque le conducteur le souhaite et qu'il active à cet effet la fonction de régulation au moyen d'un bouton dédié situé dans l'habitacle du véhicule hôte 10.

Lorsqu'il active cette fonction, le conducteur sélectionne en outre une vitesse à laquelle il souhaite que le véhicule hôte 10 roule lorsque les conditions de circulation le permettent (cette vitesse peut être fixe ou peut être variable : il peut par exemple s'agir de la limite de vitesse autorisée sur la route empruntée).

Le procédé conforme à l'invention comporte alors plusieurs étapes principales qui peuvent être maintenant décrites.

La première étape consiste, pour le calculateur, à acquérir au moins une donnée relative à la dynamique de chaque véhicule automobile tiers 11, 12.

En pratique, ces données sont issues d'une opération de fusion mathématiques des données reçues des télédétecteurs RADAR ou LIDAR et éventuellement d'autres capteurs (notamment de caméras).

Cette opération de fusion ne faisant pas en propre l'objet de la présente invention et étant bien connue par ailleurs, elle ne sera pas ici décrite plus en détail.

Parmi les données issues de cette fusion, le calculateur acquiert ici :

- la distance $D_1$ entre le véhicule hôte 10 et le premier véhicule tiers 11,
- la distance $D_2$ entre le véhicule hôte 10 et le deuxième véhicule tiers 12,
- la différence de vitesses $\Delta V_1$ entre le véhicule hôte 10 et le premier automobile tiers 11,
- la différence de vitesses $\Delta V_2$ entre le véhicule hôte 10 et le deuxième véhicule tiers 12,
- la durée $TIV_1$ nécessaire pour que véhicule hôte 10 atteigne la position du premier véhicule tiers 11,
- la durée $TIV_2$ nécessaire pour que véhicule hôte 10 atteigne la position du deuxième véhicule tiers 12.

On peut ainsi écrire :

[Math. 1]

$$\Delta V_1 = V_1 - V_0$$

[Math. 2]

$$\Delta V_2 = V_2 - V_0$$

[Math. 3]

$$TIV_1 = \frac{D_1}{\Delta V_1}$$

[Math. 4]

$$TIV_2 = \frac{D_2}{\Delta V_2}$$

Dans ces équations, $V_1$ est la vitesse du premier automobile tiers 11, $V_2$ est la vitesse du deuxième véhicule tiers 12 et $V_0$ est la vitesse du véhicule hôte 10.

La seconde étape consiste, pour le calculateur, à déterminer une consigne de pilotage à envoyer aux actionneurs du groupe motopropulseur et de la ligne de freinage, afin de réguler la vitesse $V_0$ du véhicule hôte 10.

Au cours de cette étape, l'idée va être, lorsque les deux véhicules tiers 11, 12 sont initialement à l'arrêt puis que le deuxième véhicule tiers 12 repart, de profiter de l'information selon laquelle ce deuxième véhicule repart afin d'anticiper le départ du premier véhicule tiers 11.

En d'autres termes, l'invention s'applique en particulier à la phase pendant laquelle les deux véhicules tiers sont à l'arrêt puis à la phase pendant laquelle seule le deuxième véhicule tiers 12 est reparti.

Pendant ces deux phases (et plus précisément pendant le seconde de ces deux phases), la consigne de pilotage est déterminée en fonction d'au moins une donnée relative à la dynamique du deuxième véhicule tiers 12.

Elle est ici déterminée en fonction également d'au moins une donnée relative à la dynamique du premier véhicule tiers 11.

Dans le cas où d'autres véhicules tiers se trouveraient à proximité du véhicule hôte 10 et à l'avant de celui-ci, sur sa voie de circulation (devant les deux autres véhicules tiers) ou sur une voie de circulation adjacente, il sera aussi possible de déterminer la consigne de pilotage en fonction de données relatives à la dynamique de ces autres véhicules tiers.

Dans cette phase de redémarrage des véhicules tiers 11, 12, la consigne de pilotage pourra alors être déterminée d'une façon particulière, différente de celle utilisée dans d'autres conditions de roulage.

Toutefois, ici, la consigne de pilotage sera toujours calculée de la même façon, quelles que soient les conditions de roulage, pour autant que le véhicule hôte soit précédé par deux véhicules tiers 11, 12.

La méthode de calcul de la consigne de pilotage sera la suivante.

Si le premier véhicule tiers 11 roule à une vitesse supérieure ou égale à la vitesse souhaitée par le conducteur, le véhicule hôte 10 est piloté pour rouler à cette vitesse souhaitée.

Dans le cas contraire, le véhicule hôte 10 est piloté à une vitesse inférieure à cette vitesse souhaitée.

Pour déterminer la consigne de vitesse à appliquer, le calculateur du véhicule hôte considère un véhicule virtuel équivalent.

Ce véhicule virtuel équivalent 13, représenté sur la figure 2, est une modélisation d'un véhicule dont la dynamique en termes de vitesse et de distance au véhicule hôte est déterminée en fonction de la dynamique des deux véhicules tiers 11, 12 (voire aussi de celle d'autres véhicules tiers).

L'idée est en effet de modéliser un unique véhicule virtuel en fonction des caractéristiques de plusieurs véhicules tiers, puis de déterminer la consigne de vitesse en fonction uniquement des caractéristiques de ce véhicule virtuel.

Le calculateur calcule plus précisément ici au moins une « donnée équivalente » relative à la dynamique de ce véhicule virtuel équivalent 13.

En l'espèce, il calcule ici une distance relative $D_{eq}$ entre le véhicule hôte 10 et le véhicule virtuel équivalent 13 et une vitesse relative $\Delta V_{eq}$ entre la vitesse du véhicule hôte 10 et celle du véhicule virtuel équivalent 13.

La distance relative $D_{eq}$ est calculée au moyen de l'équation suivante :

[Math. 5]

$$D_{eq} = \min\left(D_1 + (\Delta V_2 - \Delta V_1) \cdot \frac{D_2}{D_1 + D_2} \cdot k_b , D1\right)$$

Dans cette équation, le terme $k_b$ est un gain permettant de régler la réactivité du véhicule hôte. Il présente une valeur strictement inférieure à 0.

On notera qu'il ressort de cette équation que le véhicule virtuel équivalent 13 est considéré comme se trouvant entre le véhicule hôte 10 et le premier véhicule tiers 11, et au pire à la position exacte de ce dernier.

L'idée est en effet de conserver une distance de sécurité suffisant entre le véhicule hôte et ce premier véhicule tiers.

Le gain $k_b$ pourrait être prédéterminé, c'est-à-dire avoir une valeur invariable.

Il pourrait être calculé en fonction par exemple de la vitesse du véhicule hôte 10.

Il est ici calculé au moyen de l'équation suivante :

[Math. 6]

$$k_b = \min\left(f\left(\frac{TIV_2 - TIV_1}{TIV_2}, DV_2 - DV_1\right), 0\right)$$

Dans cette équation, f est une fonction mathématique prédéterminée.

A la place de cette fonction f, on pourra utiliser une cartographie à deux dimensions, dont l'une des entrées est la valeur de l'expression « ($TIV_2$ - $TIV_1$) / $TIV_2$ » et dont l'autre entrée est la valeur de l'expression « $DV_2$ - $DV_1$ ».

Dans le cas où on souhaite tenir compte de la dynamique d'autres véhicules tiers (en plus des deux véhicules tiers 11, 12), c'est cette fonction qui incorporera des termes relatifs à la dynamique de ces autres véhicules tiers.

Bien entendu, en variante, la distance relative pourrait être calculée autrement.

A ce stade, le calculateur connaît donc la valeur de la distance relative $D_{eq}$.

Connaissant les valeurs précédentes de cette distance, il peut obtenir, en dérivant cette distance par rapport au temps, la vitesse relative $\Delta V_{eq}$.

Ainsi, à ce stade, le véhicule virtuel équivalent 13 est bien caractérisé par une distance relative au véhicule hôte 10 et une vitesse relative $\Delta V_{eq}$ par rapport à celle du véhicule hôte 10.

Comme le montre la figure 3, en phase de redémarrage dans un bouchon de circulation (après que le système Stop&Start a arrêté le moteur à combustion interne), la vitesse relative $\Delta V_2$ du deuxième véhicule tiers 12 est la première à augmenter, ici de manière affine. La vitesse relative $\Delta V_1$ du premier véhicule tiers 11 augmente plus tard, ici aussi de manière affine. La vitesse relative $\Delta V_{eq}$ calculée de la façon précitée commence alors à augmenter avant celle du premier véhicule tiers 11, ce qui permet d'anticiper le redémarrage de ce dernier.

La consigne de pilotage du véhicule hôte 10 par le système ACC est ici déterminée en fonction uniquement de ces deux paramètres que sont la distance relative $D_{eq}$ et la vitesse relative $\Delta V_{eq}$.

Comme le montre la courbe E'0 sur la figure 4 qui représente l'état $\alpha$ (arrêté ou démarré) du moteur à combustion interne, si le calculateur ne tenait pas compte du deuxième véhicule tiers 12 et ne calculait donc pas ces deux paramètres, le moteur à combustion interne du véhicule hôte 10 serait redémarré au moment $t_2$ où le premier véhicule tiers repartirait, ce qui prend en moyenne une seconde. Le véhicule hôte 10 repartirait donc à un instant $t_4$ tardif (voir la vitesse $V_0$ du véhicule hôte représentée par la courbe C'0).

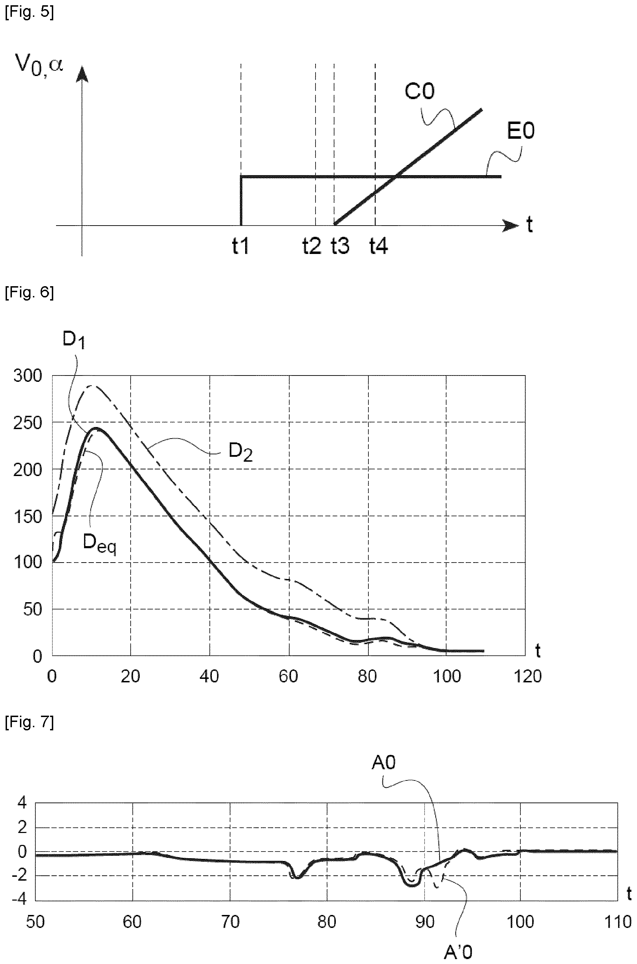

Ici, comme le montre la figure 5, le moteur à combustion interne du véhicule hôte est redémarré au moment $t_1$ où le véhicule virtuel équivalent 13 repart. Le véhicule hôte 10 est donc en mesure de repartir à un instant $t_3$ plus précoce (voir la vitesse $V_0$ du véhicule hôte représentée par la courbe C0).

Plus précisément, le véhicule hôte 10 pourrait repartir au même moment que le premier véhicule tiers 11. Il est toutefois ici prévu d'attendre que ce dernier s'écarte suffisamment, ce qui revient à attendre que la distance relative $D_{eq}$ dépasse un seuil prédéterminé avant de commander le départ du véhicule hôte 10. Il est aussi prévu d'attendre que la vitesse relative $\Delta V_{eq}$ dépasse un seuil avant de commander le départ du véhicule hôte 10.

Ces deux seuils sont ici prédéterminés. Le seuil de distance est par exemple de 5 mètres tandis que le seuil de vitesse est par exemple de 5 km/h.

Comme cela a été expliqué supra, le processus précité de calcul de la consigne de vitesse du véhicule hôte est applicable non seulement pendant la phase de redémarrage des véhicules tiers 11, 12, mais aussi dans toute autre condition de circulation, pour autant que le véhicule hôte suive deux véhicules tiers.

Pour bien illustrer cette assertion, on a représenté sur les figures 6 et 7 des courbes correspondant à un cas où le véhicule hôte 10 roule derrière deux véhicules tiers et où le second véhicule tiers 12 commence à freiner.

On observe sur la figure 6 les distances relatives entre le véhicule hôte 10 et le premier véhicule tiers 11 (courbe $D_1$), entre le véhicule hôte 10 et le deuxième véhicule tiers 12 (courbe $D_2$), et entre le véhicule hôte 10 et le véhicule virtuel équivalent 13 (courbe $D_{eq}$).

On y observe, lorsque t est compris entre 60 et 100 s, que lorsque la distance relative $D_2$ diminue, la distance relative $D_{eq}$ diminue plus vite que la distance relative $D_1$, ce qui permet de commander le véhicule hôte 10 en avance de phase par rapport au premier véhicule tiers 11, ce qui permet de maintenir une bonne distance de sécurité avec ce dernier.

L'idée ici est de permettre d'anticiper le fait que le premier véhicule tiers 11 va continuer à freiner puisque le second véhicule tiers 12 freine encore, de façon à assurer un freinage plus linéaire et sans à-coups.

Sur la figure 7, on a représenté l'accélération A0 subie dans ces conditions par le véhicule hôte 10 et l'accélération A'0 qui serait subie si on ne tenait pas compte de la présence du second véhicule tiers dans le calcul de la consigne de vitesse. On y observe que les variations de l'accélération grâce à l'invention sont réduites, ce qui permet de diminuer les à-coups ressentis par les passagers du véhicule hôte 10.

Un autre avantage est que cette anticipation permet de maintenir l'accélération entre des bornes prédéterminées, ce qui permet à la fonction ACC de rester active.

La fonction ACC est en effet désactivée automatiquement en cas de risque d'accident, par exemple si l'accélération que le véhicule doit subir dépasse ces bornes. Ici, cette éventualité arrive moins souvent grâce à l'anticipation du freinage.

## Revendications

1. Procédé de régulation automatique de la vitesse ($V_0$) d'un véhicule automobile hôte (10), comportant, lorsqu'au moins deux véhicules automobiles tiers (11, 12) précèdent le véhicule automobile hôte (10) sur sa voie de circulation, des étapes de :

 - acquisition d'au moins une donnée ($D_1$, $D_2$, $\Delta V_1$, $\Delta V_2$, $TIV_1$, $TIV_2$) relative à la dynamique de chaque véhicule automobile tiers (11, 12), et
 - détermination d'une consigne de pilotage des moyens de commande de la vitesse ($V_0$) du véhicule automobile hôte (10),

dans lequel, lorsque les deux véhicules automobiles tiers (11, 12) sont à l'arrêt, un premier des véhicules automobiles tiers (11) suivant un deuxième des véhicules automobiles tiers (12), puis que le deuxième véhicule automobile tiers (12) repart, la consigne de pilotage est déterminée en fonction au moins de ladite au moins une donnée ($D_2$, $\Delta V_2$, $TIV_2$) relative à la dynamique du deuxième véhicule automobile tiers (12),

**caractérisé en ce que**, le véhicule automobile hôte (10) comportant un moteur à combustion interne et un système d'arrêt et de redémarrage automatique du moteur à combustion interne, la consigne de pilotage est élaborée de façon à ce que le système d'arrêt et de redémarrage redémarre automatiquement le moteur à combustion interne après que le deuxième véhicule automobile tiers (12) est reparti et avant que le premier véhicule automobile tiers (11) ne reparte.

2. Procédé de régulation automatique selon la revendication précédente, dans lequel la consigne de pilotage est déterminée en fonction également de ladite au moins une donnée ($D_1$, $\Delta V_1$, $TIV_1$) relative à la dynamique du premier véhicule automobile tiers (11).

3. Procédé de régulation automatique selon l'une des revendications précédentes, dans lequel, si au moins un troisième véhicule automobile tiers précède le véhicule automobile hôte (10) sur sa voie de circulation et/ou sur une voie de circulation adjacente à sa voie de circulation, la consigne de pilotage est déterminée en fonction également d'au moins une donnée relative à la dynamique dudit au moins un troisième véhicule automobile tiers.

4. Procédé de régulation automatique selon l'une des revendications précédentes, dans lequel il est prévu une étape de détermination d'au moins une donnée équivalente relative à la dynamique d'un véhicule virtuel équivalent (13) en fonction des données ($D_1$, $D_2$, $\Delta V_1$, $\Delta V_2$, $TIV_1$, $TIV_2$) relatives à la dynamique de chaque véhicule automobile tiers (11, 12), et dans lequel la consigne de pilotage est déterminée en fonction de ladite au moins une donnée équivalente.

5. Procédé de régulation automatique selon la revendication précédente, dans lequel ladite donnée équivalente comprend une distance relative ($D_{eq}$) et/ou une vitesse relative ($\Delta V_{eq}$) entre le véhicule automobile hôte (10) et le véhicule virtuel équivalent (13).

6. Procédé de régulation automatique selon la revendication précédente, dans lequel ladite distance relative ($D_{eq}$) est calculée au moyen de l'équation suivante :

$$D_{eq} = \min\left(D_1 + (\Delta V_2 - \Delta V_1) \cdot \frac{D_2}{D_1 + D_2} \cdot k_b \ , D1\right),$$

où :

- $D_{eq}$ est la distance relative,
- $D_1$ est la distance entre le véhicule automobile hôte (10) et le premier véhicule automobile tiers (11),
- $D_2$ est la distance entre le véhicule automobile hôte (10) et le deuxième véhicule automobile tiers (12),
- $\Delta V_1$ est la différence de vitesses entre le véhicule automobile hôte (10) et le premier véhicule automobile tiers (11),
- $\Delta V_2$ est la différence de vitesses entre le véhicule automobile hôte (10) et le deuxième véhicule automobile tiers (12),
- $k_b$ est un gain prédéterminé ou calculé, qui est inférieur ou égal à 0.

7. Procédé de régulation automatique selon la revendication précédente, dans lequel le gain ($k_b$) est calculé au moyen de l'équation suivante :

$$k_b = \min\left(f\left(\frac{TIV_2 - TIV_1}{TIV_2} \ , DV_2 - DV_1\right), 0\right),$$

où :

- f est une fonction mathématique prédéterminée,
- $TIV_1$ est une durée nécessaire pour que véhicule automobile hôte (10) atteigne la position du premier véhicule automobile tiers (11),
- $TIV_2$ est une durée nécessaire pour que véhicule automobile hôte (10) atteigne la

position du deuxième véhicule automobile tiers (12).

8. Procédé de régulation automatique selon l'une des revendications 5 à 7, dans lequel la vitesse relative ($\Delta V_{eq}$) est obtenue en dérivant la distance relative ($D_{eq}$) par rapport au temps.

9. Véhicule automobile (10) comportant des moyens de commande de sa vitesse ($V_0$), qui comprennent un groupe motopropulseur et des moyens de freinage et qui sont commandés par un ou plusieurs actionneurs pilotés par un calculateur (C10), **caractérisé en ce que** le calculateur (C10) est configuré pour mettre en oeuvre un procédé de régulation automatique conforme à l'une des revendications précédentes.

**Patentansprüche**

1. Verfahren zur automatischen Regelung der Geschwindigkeit (V0) eines Host-Kraftfahrzeugs (10), das, wenn mindestens zwei Drittkraftfahrzeuge (11, 12) vor dem Host-Kraftfahrzeug (10) auf dessen Fahrspur fahren, die folgenden Schritte umfasst:

   - Erfassen mindestens eines sich auf die Dynamik jedes Drittkraftfahrzeugs (11, 12) beziehenden Datenwerts (D1, D2, $\Delta V_1$, $\Delta V_2$, $TIV_1$, $TIV_2$), und
   - Bestimmen eines Fahrsollwerts der Mittel zur Steuerung der Geschwindigkeit ($V_0$) des Host-Kraftfahrzeugs (10),
   wobei, wenn die zwei Drittkraftfahrzeuge (11, 12) sich im Stillstand befinden, wobei ein erstes der Drittkraftfahrzeuge (11) einem zweiten der Drittkraftfahrzeuge (12) folgt, und dann das zweite Drittkraftfahrzeug (12) wieder anfährt, der Fahrsollwert in Abhängigkeit von mindestens dem mindestens einen Datenwert ($D_2$, $\Delta V_2$, $TIV_2$) bestimmt wird, der sich auf die Dynamik des zweiten Drittkraftfahrzeugs (12) bezieht,
   **dadurch gekennzeichnet, dass,** wobei das Host-Kraftfahrzeug (10) einen Verbrennungsmotor und ein System zum automatischen Anhalten und Wiederstarten des Verbrennungsmotors umfasst, der Fahrsollwert so gestaltet wird, dass das System zum Anhalten und Wiederstarten den Verbrennungsmotor automatisch wieder startet, nachdem das zweite Drittkraftfahrzeug (12) wieder angefahren ist und bevor das erste Drittkraftfahrzeug (11) wieder angefahren ist.

2. Verfahren zur automatischen Regelung nach dem vorstehenden Anspruch, wobei der Fahrsollwert auch in Abhängigkeit von dem mindestens einen sich auf die Dynamik des ersten Drittkraftfahrzeugs (11) beziehenden Datenwert ($D_1$, $\Delta V_1$, $TIV_1$) bestimmt wird.

3. Verfahren zur automatischen Regelung nach einem der vorstehenden Ansprüche, wobei, wenn mindestens ein drittes Drittkraftfahrzeug dem Host-Kraftfahrzeug (10) auf seiner Fahrspur und/oder auf einer an seine Fahrspur angrenzenden Fahrspur vorausfährt, der Fahrsollwert auch in Abhängigkeit von mindestens einem sich auf die Dynamik des mindestens einen dritten Drittkraftfahrzeugs beziehenden Datenwert bestimmt wird.

4. Verfahren zur automatischen Regelung nach einem der vorstehenden Ansprüche, wobei ein Schritt vorgesehen ist, bei dem mindestens ein äquivalenter sich auf die Dynamik eines äquivalenten virtuellen Fahrzeugs (13) beziehender Datenwert in Abhängigkeit von den sich auf die Dynamik jedes Drittkraftfahrzeugs (11, 12) beziehenden Datenwerten ($D_1$, $D_2$, $\Delta V_1$, $\Delta V_2$, $TIV_1$, $TIV_2$) bestimmt wird, und wobei der Fahrsollwert in Abhängigkeit von dem mindestens einen äquivalenten Datenwert bestimmt wird.

5. Verfahren zur automatischen Regelung nach dem vorstehenden Anspruch, wobei der äquivalente Datenwert einen relativen Abstand ($D_{eq}$) und/oder eine relative Geschwindigkeit ($\Delta V_{eq}$) zwischen dem Host-Kraftfahrzeug (10) und dem äquivalenten virtuellen Fahrzeug (13) umfasst.

6. Verfahren zur automatischen Regelung nach dem vorstehenden Anspruch, wobei der relative Abstand ($D_{eq}$) mittels der folgenden Gleichung berechnet wird:

$$D_{eq} = \min\left( D_1 + (\Delta V_2 - \Delta V_1) \cdot \frac{D_2}{D_1 + D_2} \cdot k_b, D_1 \right),$$

wobei:

   - $D_{eq}$ der relative Abstand ist,

EP 4 056 439 B1

- $D_1$ der Abstand zwischen dem Host-Kraftfahrzeug (10) und dem ersten Drittkraftfahrzeug (11) ist,
- $D_2$ der Abstand zwischen dem Host-Kraftfahrzeug (10) und dem zweiten Drittkraftfahrzeug (12) ist,
- $\Delta V_1$ die Geschwindigkeitsdifferenz zwischen dem Host-Kraftfahrzeug (10) und dem ersten Drittkraftfahrzeug (11) ist,
- $\Delta V_2$ die Geschwindigkeitsdifferenz zwischen dem Host-Kraftfahrzeug (10) und dem zweiten Drittkraftfahrzeug (12) ist,
- $k_b$ eine vorbestimmte oder berechnete Verstärkung ist, die kleiner oder gleich 0 ist.

7. Verfahren zur automatischen Regelung nach dem vorstehenden Anspruch, wobei die Verstärkung ($k_b$) mittels der folgenden Gleichung berechnet wird:

$$k_b = \min\left(f\left(\frac{TIV_2 - TIV_1}{TIV_2}, DV_2 - DV_1\right), 0\right),$$

wobei:

- f eine vorbestimmte mathematische Funktion ist,
- $TIV_1$ eine Dauer ist, die erforderlich ist, damit das Host-Kraftfahrzeug (10) die Position des ersten Drittkraftfahrzeugs (11) erreicht,
- $TIV_2$ eine Dauer ist, die erforderlich ist, damit das Host-Kraftfahrzeug (10) die Position des zweiten Drittkraftfahrzeugs (12) erreicht.

8. Verfahren zur automatischen Regelung nach einem der Ansprüche 5 bis 7, wobei die relative Geschwindigkeit ($\Delta V_{eq}$) durch Ableitung des relativen Abstands ($D_{eq}$) nach der Zeit erhalten wird.

9. Kraftfahrzeug (10), das Mittel zur Steuerung seiner Geschwindigkeit ($V_0$) umfasst, die einen Antriebsstrang und Bremsmittel umfassen und die von einem oder mehreren Aktuatoren gesteuert werden, die von einem Rechner (C10) gesteuert werden, **dadurch gekennzeichnet, dass** der Rechner (C10) dazu konfiguriert ist, ein Verfahren zur automatischen Regelung nach einem der vorstehenden Ansprüche zu implementieren.

**Claims**

1. A method for automatically regulating the speed ($V_0$) of a host motor vehicle (10), comprising, when at least two third-party motor vehicles (11, 12) precede the host motor vehicle (10) in its lane, the steps of:

- acquisition of at least one datum ($D_1$, $D_2$, $\Delta V_1$, $\Delta V_2$, $TIV_1$, $TIV_2$) relating to the dynamics of each third-party motor vehicle (11, 12), and
- determination of a control setpoint for means for controlling the speed ($V_0$) of the host motor vehicle (10), wherein, when the two third-party motor vehicles (11, 12) are stationary, a first of the third-party motor vehicles (11) following a second of the third-party motor vehicles (12), and then the second third-party motor vehicle (12) starts moving again, the control setpoint is determined as a function of at least said at least one datum ($D_2$, $\Delta V_2$, $TIV_2$) relating to the dynamics of the second third-party motor vehicle (12), **characterized in that,** since the host motor vehicle (10) has an internal combustion engine and a system for automatically stopping and restarting the internal combustion engine, the control setpoint is designed in such a way that the stop and restart system automatically restarts the internal combustion engine after the second third-party motor vehicle (12) has set off again and before the first third-party motor vehicle (11) sets off again.

2. The automatic control method according to the preceding claim, wherein the control setpoint is also determined as a function of said at least one datum ($D_1$, $\Delta V_1$, $TIV_1$) relating to the dynamics of the first third-party motor vehicle (11).

3. The automatic control method according to one of the preceding claims, wherein, if at least a third third-party motor vehicle is ahead of the host motor vehicle (10) in its lane and/or in a lane adjacent to its lane, the control setpoint is also determined as a function of at least one datum relating to the dynamics of said at least third third-party motor vehicle.

4. The automatic control method according to one of the preceding claims, wherein a step is provided for determining at least one equivalent datum relating to the dynamics of an equivalent virtual vehicle (13) as a function of the data ($D_1$, $D_2$, $\Delta V_1$, $\Delta V_2$, $TIV_1$, $TIV_2$) relating to the dynamics of each third-party motor vehicle (11, 12), and wherein the control setpoint is determined as a function of said at least one equivalent datum.

5. The automatic control method according to the preceding claim, wherein said equivalent datum comprises a relative distance ($D_{eq}$) and/or a relative speed ($\Delta V_{eq}$) between the host motor vehicle (10) and the equivalent virtual vehicle (13).

6. The automatic control method according to the preceding claim, wherein said relative distance ($D_{eq}$) is calculated by means of the following equation:

$$D_{eq} = \min \left( D_1 + (\Delta V_2 - \Delta V_1) \cdot \frac{D_2}{D_1 + D_2} \cdot k_b \ , D1 \right),$$

where:

- $D_{eq}$ is the relative distance,
- $D_1$ is the distance between the host motor vehicle (10) and the first third-party motor vehicle (11),
- $D_2$ is the distance between the host motor vehicle (10) and the second third-party motor vehicle (12),
- $\Delta V_1$ is the speed difference between the host motor vehicle (10) and the first third-party motor vehicle (11),
- $\Delta V_2$ is the speed difference between the host motor vehicle (10) and the second third-party motor vehicle (12),
- $k_b$ is a predetermined or calculated gain, which is less than or equal to 0.

7. The automatic control method according to the preceding claim, wherein the gain ($k_b$) is calculated by means of the following equation:

$$k_b = \min \left( f \left( \frac{TIV_2 - TIV_1}{TIV_2} \ , DV_2 - DV_1 \right), 0 \right),$$

where:

- f is a predetermined mathematical function,
- $TIV_1$ is the time required for the host vehicle (10) to reach the position of the first third-party vehicle (11),
- $TIV_2$ is the time required for the host motor vehicle (10) to reach the position of the second third-party motor vehicle (12).

8. The automatic control method according to one of claims 5 to 7, wherein the relative speed ($\Delta V_{eq}$) is obtained by deriving the relative distance ($D_{eq}$) with respect to time.

9. A motor vehicle (10) comprising means for controlling its speed ($V_0$), which comprise a drive train and braking means and which are controlled by one or more actuators controlled by a computer (C10), **characterized in that** the computer (C10) is configured to implement an automatic regulation method in accordance with one of the preceding claims.

[Fig. 1]

[Fig. 2]

[Fig. 3]

[Fig. 4]

[Fig. 5]

[Fig. 6]

[Fig. 7]

## RÉFÉRENCES CITÉES DANS LA DESCRIPTION

**Documents brevets cités dans la description**

- JP 4411794 B
- EP 2251240 A